# EUROPEAN PATENT SPECIFICATION

(11) **EP 3 447 498 B1**
(45) Date of publication and mention of the grant of the patent: **30.10.2024**
(21) Application number: 18189604.4
(22) Date of filing: 17.08.2018
(51) Int. Cl.: G01N 35/00, G01N 35/10

(54) **LIQUID DISPENSING APPARATUS AND SYSTEM**
FLÜSSIGKEITSSPENDEVORRICHTUNG UND -SYSTEM
APPAREIL ET SYSTÈME DE DISTRIBUTION DE LIQUIDES

(30) Priority: 22.08.2017 JP 2017159477
(43) Date of publication of application: 27.02.2019
(73) Proprietor: RISO Technologies Corporation, Tokyo 108-8385 (JP)
(72) Inventor: YOKOYAMA, Shuhei, Shinagawa-ku,, Tokyo 141-8562 (JP); KAIHO, Satoshi, Shinagawa-ku,, Tokyo 141-8562 (JP); KUSUNOKI, Ryutaro, Shinagawa-ku,, Tokyo 141-8562 (JP); SHIMIZU, Seiya, Shinagawa-ku,, Tokyo 141-8562 (JP)
(74) Representative: Bandpay & Greuter

(56) References cited:
- US-A1- 2006 190 185
- US-A1- 2009 049 933
- US-A1- 2017 165 969

## Description

### FIELD

Embodiments described herein relate generally to a liquid dispensing apparatus and a system.

### BACKGROUND

In a liquid dispensing apparatus, a liquid is dispensed through a liquid discharging device. The liquid discharging device can be detachable from the liquid dispensing apparatus so that it can be discarded after a single use to prevent contamination. For example, US patent application US 2006/190185A discloses a reagent management system including an automated biological reaction apparatus including at least one reagent dispenser, a memory device containing data for a reagent device selected from the group consisting of a reagent dispenser or a reagent kit used in the automated biological reaction apparatus, a host device comprising a processor and a host device memory connected to the processor.

However, there is a problem in existing dispensing systems in that the discharging device might be reused or kept in service even though the discharging is designed, or at least intended, only for single use.

### SUMMARY OF INVENTION

To solve the above-cited problems, there is provided a liquid dispensing apparatus, as defined in claim 1. There is also provided a liquid discharging system defined in claim 5. There is further provided a method for discharging a liquid from a liquid dispensing apparatus defined in claim 9. Preferred embodiments are defined in dependent claims.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic perspective view of a discharging system according to a first embodiment.
Fig. 2 is a top view of a liquid discharging device according to the first embodiment.
Fig. 3 is a bottom view of a liquid discharging device according to the first embodiment.
Fig. 4 is a cross-sectional view taken along a line F4-F4 of Fig. 2.
Fig. 5 is a cross-sectional view taken along a line F5-F5 of Fig. 4.
Fig. 6 is a block diagram of a control system of the discharging system according to the first embodiment.
Fig. 7 is a block diagram of a configuration example of a server according to the first embodiment.
Fig. 8 is a flowchart showing an operation example of a liquid dispensing apparatus according to the first embodiment.
Fig. 9 is a flowchart showing an operation example of a liquid dispensing apparatus according to a second embodiment.
Fig. 10 is a cross-sectional view taken along a line F10-F10 of Fig. 4 according to a third embodiment.

### DETAILED DESCRIPTION

The present invention is directed to a liquid dispensing apparatus according to appended claim 1.

Hereinafter, liquid dispensing apparatuses and liquid discharging systems according to certain example embodiments will be described with reference to the drawings. It should be noted, that the particular embodiments explained below are some possible examples of liquid dispensing apparatuses and chemical liquid discharging systems according to the present disclosure and do not limit the possible configurations, specifications, or the like of liquid dispensing apparatuses and liquid discharging systems according to the present disclosure. The drawings are schematic and are in some instances drawn with exaggeration and omissions for purposes of explanatory convenience. In general, components are not drawn to scale. The number of components, the dimensional ratio between different components, or the like does not necessarily match between different drawings or to actual devices.

### (First Embodiment)

A discharging system according to a first embodiment discharges a predetermined liquid by a piezo jet method. For example, the discharging system discharges several picoliters (pL) to several microliters (µL) of a liquid into a microplate, a multi-well plate, or the like according to a user operation. For example, the discharging system is used in a laboratory in a technical field such as biology, chemistry, or pharmacy research.

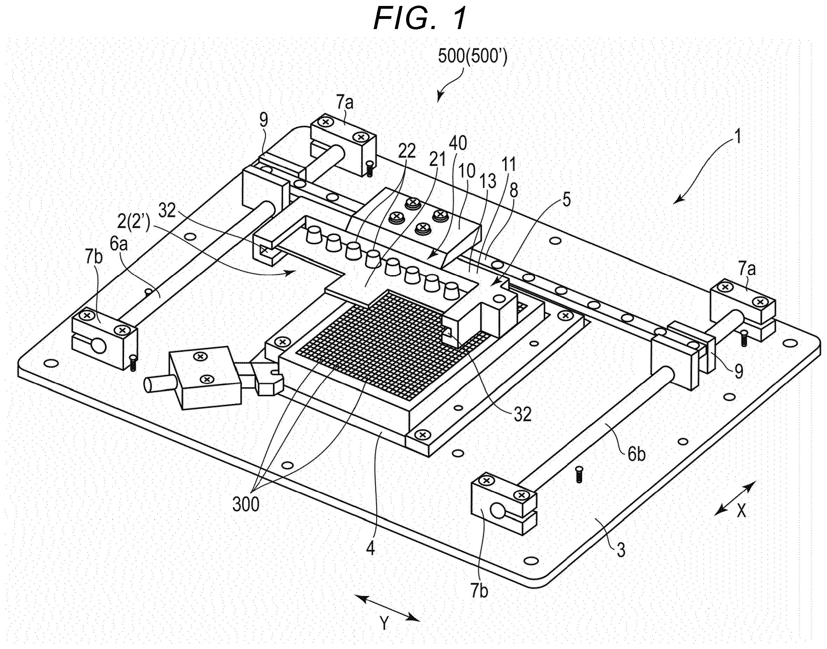

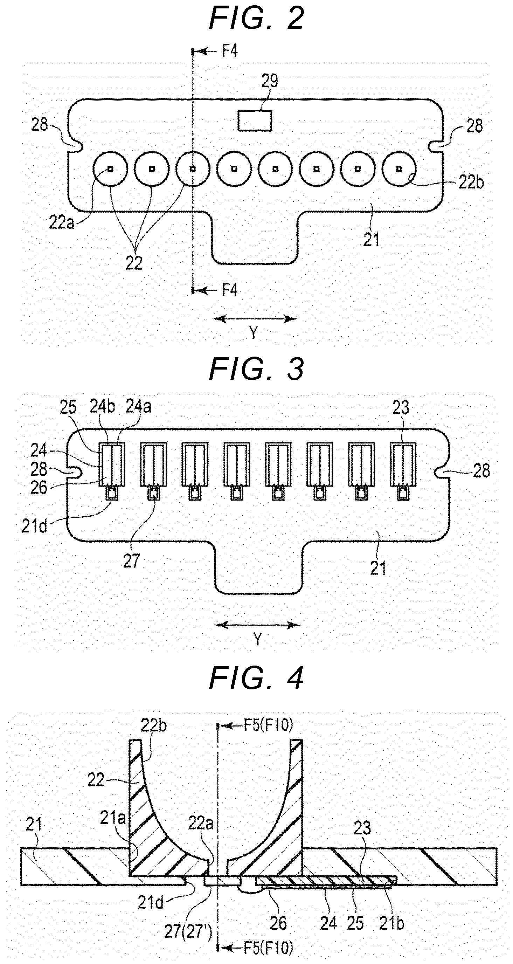

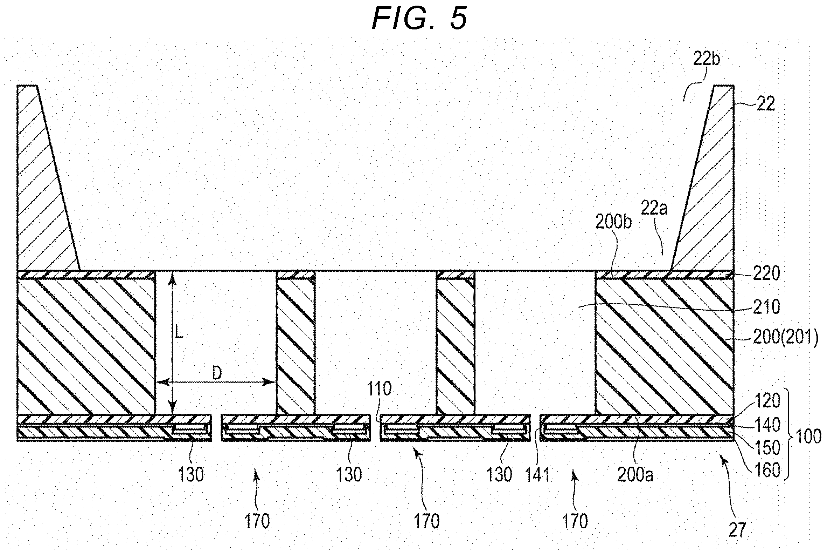

A configuration example of the discharging system according to the first embodiment will be described with reference to Figs. 1 to 5. Fig. 1 is a schematic perspective view of the discharging system 500. Fig. 2 is a top view of a chemical liquid discharging device 2. Fig. 3 is a bottom view of a surface of the chemical liquid discharging device 2 from which a liquid is discharged. Fig. 4 is a cross-sectional view taken along a line F4-F4 in Fig. 2. Fig. 5 is a cross-sectional view taken along a line F5-F5 in Fig. 4.

As shown in Fig. 1, the discharging system 500 includes a chemical liquid dispensing apparatus 1, the chemical liquid discharging device 2, a host computer 18, a server 50 (also referred to as an information processing device or external device), and the like. The discharging system 500 may have more elements in addition to the elements depicted in Fig. 1, or some of the elements depicted in Fig. 1 may be omitted in some embodiments.

The chemical liquid dispensing apparatus 1 controls the chemical liquid discharging device 2 to dispense a liquid from the chemical liquid discharging device 2.

The chemical liquid dispensing apparatus 1 includes a base 3 of a rectangular flat plate shape, and a mounting module 5 that mounts the chemical liquid discharging device 2. In the first embodiment, it is assumed that the chemical liquid dispensing apparatus 1 dispenses the liquid into a microplate 4 having 1536 wells. Here, the front to rear direction of the base 3 is referred to as an X direction, and the right to left direction of the base 3 is referred to as a Y direction. The X direction and the Y direction are orthogonal.

The microplate 4 is fixed to the base 3. The microplate 4 includes a plurality of wells 300. Each well 300 of the microplate 4 holds a predetermined volume of a liquid. For example, the liquids in the microplate can be chemicals, reagents, solutions, solvents, or the like and/or may include cells, blood cells, bacteria, plasma, antibodies, DNA, nucleic acids or proteins.

The chemical liquid dispensing apparatus 1 includes a pair of right and left X direction guide rails 6a and 6b extending in the X direction on both sides of the microplate 4 on the base 3. Both ends each of the X direction guide rails 6a and 6b are fixed to fixing bases 7a and 7b protruding on the base 3.

A Y direction guide rail 8 extending in the Y direction is installed between the X direction guide rails 6a and 6b. Both ends of the Y direction guide rail 8 are fixed to an X direction moving base 9 that is slidable in the X direction along the X direction guide rails 6a and 6b, respectively.

The Y direction guide rail 8 includes a Y direction moving base 10 that allows a mounting module 5 to move in the Y direction along the Y direction guide rail 8. The mounting module 5 is mounted on the Y direction moving base 10. The chemical liquid discharging device 2 is fixed to the mounting module 5.

The chemical liquid discharging device 2 is supported so as to be movable to an arbitrary position in the XY directions orthogonal to each other by a combination of an operation of a movement in the Y direction moving base 10 along the Y direction guide rail 8 in the Y direction and an operation of a movement in the X direction moving base 9 along the X direction guide rails 6a and 6b in the X direction.

In the mounting module 5, a slit 32 for fixing the chemical liquid discharging device 2 is formed. When the chemical liquid discharging device 2 is inserted into the slit 32 from a front surface opening portion side of the slit 32, the chemical liquid discharging device 2 is fixed to the chemical liquid dispensing apparatus 1.

The mounting module 5 includes a driving circuit 11, a reader 40 (also referred to as an acquisition unit) and the like.

The driving circuit 11 drives the chemical liquid discharging device 2 based on a signal from the processor 15. For example, the driving circuit 11 supplies a signal, electric power, and the like to the chemical liquid discharging device 2 to discharge the liquid from the chemical liquid discharging device 2.

The reader 40 is a reading unit that reads a code 29 specific to the chemical liquid discharging device 2. The reader 40 captures an image of the code 29 and decodes the code 29. The reader 40 transmits the decoded result to the processor 15.

For example, the reader 40 includes an imaging unit such as a CCD. The reader 40 may include a light or the like that illuminates the code 29.

The reader 40 is installed at a position corresponding to the code 29 of the chemical liquid discharging device 2. That is, the reader 40 is installed at a position where the code 29 may be read when the chemical liquid discharging device 2 is set in the mounting module 5.

The chemical liquid discharging device 2 discharges the liquid based on a control of the chemical liquid dispensing apparatus 1.

The chemical liquid discharging device 2 includes a base member 21 of a flat planar shape that is a plate of a rectangular plate shape. As shown in Fig. 2, a plurality of chemical liquid holding containers 22 is arranged in a row in the Y direction, on a surface side of the base member 21. In the first embodiment, eight chemical liquid holding containers 22 are included. However, the number is not limited to eight. As shown in Fig. 4, the chemical liquid holding container 22 is a container of a cylindrical shape having a bottom, of which a top surface is opened. A chemical liquid holding container recessed portion 21a of a cylindrical shape is formed at a position corresponding to each chemical liquid holding container 22, on the surface side of the base member 21.

The bottom portion of the chemical liquid holding container 22 is adhered and fixed to the recessed portion 21a for the chemical liquid holding container. A bottom surface opening portion 22a serving as a liquid outlet port is formed at the center position on the bottom portion of the chemical liquid holding container 22. The opening area of a top surface opening portion 22b is larger than the opening area of the bottom surface opening portion 22a of the liquid outlet port.

At both ends of the base member 21, mount fixing notches 28 for mounting and fixing the mounting module 5 are formed respectively. The mount fixing notch 28 is engaged with the mounting module 5. Two notches 28 of the base member 21 are formed in a notch shape of a semi-long circular shape. The mount fixing notch 28 may be a notch shape of a semi-circular shape, a semi-elliptical shape, a triangular shape, or the like. In the first embodiment, the shapes of the two notches 28 are different from each other. Therefore, the left and right shapes of the base member 21 are different, and it is easy to identify the posture of the base member 21.

In the chemical liquid discharging device 2, the code 29 is on the base member 21. The chemical liquid discharging device 2 is set in the chemical liquid dispensing apparatus 1 such that the code 29 on the chemical liquid discharging device 2 can be readable by the reader 40.

The code 29 indicates an identifier (that is identification information) for specifying the chemical liquid discharging device 2. For example, the code 29 includes a character string, a numerical value, or a combination thereof as the identifier encoded. That is, the code 29 includes the identifier for specifying the chemical liquid discharging device 2 when the code 29 is decoded. The code 29 may be a one-dimensional code, a two-dimensional code, or the like.

The code 29 is attached to the chemical liquid discharging device 2 in advance at the time of manufacturing the chemical liquid discharging device 2 or the like.

As shown in Fig. 3, the same number of electrical substrate 23 as the chemical liquid holding container 22 are arranged in row in the Y direction, on a rear surface side of the base member 21. The electrical substrate 23 is a flat plate member of a rectangular shape. As shown in Fig. 4, an electrical substrate recessed portion 21b for mounting the electrical substrate 23 and a chemical liquid discharge array portion opening 21d connected with the electrical substrate recessed portion 21b are formed, on the rear surface side of the base member 21. A base end portion of the electrical substrate recessed portion 21b extends to the vicinity of an upper end portion of the base member 21 in Fig. 3 (the position in the vicinity of the right end portion in Fig. 4). As shown in Fig. 4, a distal end portion of the electrical substrate recessed portion 21b extends to a position overlapping a portion of the chemical liquid holding container 22. The electrical substrate 23 is adhered and fixed to the electrical substrate recessed portion 21b.

An electrical substrate wiring 24 is patterned and formed on a surface opposite to an adhesive fixing surface of the electrical substrate recessed portion 21b, on the electrical substrate 23. Wiring patterns 24a and 24b respectively connected to a driving element 130 are formed on the electrical substrate wiring 24.

A control signal input terminal 25 for inputting an electrical signal (also referred to as a driving signal) from the driving circuit 11 is formed at one end portion of the electrical substrate wiring 24. An electrode terminal connection portion 26 is provided at the other end portion of the electrical substrate wiring 24.

The base member 21 is provided with the chemical liquid discharge array portion opening 21d. As shown in Fig. 3, the chemical liquid discharge array portion opening 21d is an opening portion of a rectangular shape and is formed at a position overlapping with the chemical liquid holding container recessed portion 21a on the rear surface side of the base member 21.

A chemical liquid discharge array 27 is adhered and fixed to the bottom surface of the chemical liquid holding container 22 with the chemical liquid discharge array 27 covering the bottom surface opening portion 22a of the chemical liquid holding container 22. The chemical liquid discharge array 27 is disposed at a position corresponding to the chemical liquid discharge array portion opening 21d of the base member 21.

As shown in Fig. 5, the chemical liquid discharge array 27 is formed by laminating a nozzle plate 100 and a pressure chamber structure 200. The nozzle plate 100 includes a nozzle 110 that discharges the liquid, a diaphragm 120, the driving element 130 that is a driving unit, an insulation film 140 that insulates the driving element 130, a protection film 150 that is protection layer, a liquid repellant film 160. An actuator 170 includes the diaphragm 120 and the driving element 130. For example, a plurality of nozzles 110 is arranged in 3x3 rows. The plurality of nozzles 110 is positioned inside the bottom surface opening portion 22a of the liquid outlet port of the chemical liquid holding container 22. The chemical liquid holding container 22, the pressure chamber structure 200, the actuator 170, and the like form a discharging portion that discharges the liquid.

For example, the diaphragm 120 is integrated with the pressure chamber structure 200. When a heat treatment is performed on a silicon wafer 201 in an oxygen atmosphere, a SiO₂ (silicon oxide) film is formed on the surface of the silicon wafer 201. The diaphragm 120 uses the SiO₂ film on the surface of the silicon wafer 201. The diaphragm 120 may be formed by depositing the SiO₂ film on the surface of the silicon wafer 201 by a CVD (Chemical Vapor Deposition) method.

The film thickness of the diaphragm 120 is preferably in a range of 1 to 30 µm. The diaphragm 120 may use a semiconductor material such as SiN (silicon nitride), Al₂O₃ (aluminum oxide), or the like, instead of the SiO₂ film.

The driving element 130 is formed in each nozzle 110. The driving element 130 is an annular shape surrounding the nozzle 110. The shape of the driving element 130 is not limited, and may be, for example, a C shape in which a portion of the circular ring is cut out.

The driving element 130 is electrically connected to the electrode terminal connection portion 26. The driving element 130 is driven by electric power supplied from the electrode terminal connection portion 26.

The driving element 130 includes a piezoelectric film that is a piezoelectric material, and uses PZT (Pb(Zr, Ti)O₃: lead zirconate titanate). For example, a piezoelectric film included in the driving element 130 may use a piezoelectric material such as PTO (PbTiO₃: lead titanate), PMNT (Pb(Mg_{1/3}Nb_{2/3})O₃-PbTiO₃), PZNT (Pb(Zn_{1/3}Nb_{2/3})O₃-PbTiO₃), KNN (a compound of KNbO₃ and NaNbO₃), ZnO, and AlN may be used.

The piezoelectric film included in the driving element 130 generates a polarization in the thickness direction. When an electric field in the same direction as the polarization is applied to the driving element 130, the driving element 130 extends or contracts in a direction orthogonal to the electric field direction. That is, the driving element 130 contracts or extends in a direction orthogonal to the film thickness direction.

The nozzle plate 100 includes the protection film 150. The protection film 150 includes a chemical liquid passage portion 141 of a cylindrical shape that is connected to the nozzle 110 of the diaphragm 120.

The nozzle plate 100 includes the liquid repellant film 160 that covers the protection film 150. For example, the liquid repellant film 160 is formed by spin-coating, for example, a silicon type resin having a characteristic of repelling a liquid. The liquid repellant film 160 may also be formed by a fluorinated resin material.

The pressure chamber structure 200 includes a warp reduction film 220 that is a warp reduction layer on a surface opposite to the diaphragm 120. The pressure chamber structure 200 includes a pressure chamber 210 that penetrates the warp reduction film 220, is positioned at the position of the diaphragm 120, and is connected to the nozzle 110. For example, the pressure chamber 210 is formed in a circular shape positioned in the same axis as the nozzle 110.

The pressure chamber 210 includes an opening portion connected to the bottom surface opening portion 22a of the chemical liquid holding container 22. It is preferable that the size L in the depth direction of the opening portion of the pressure chamber 210 is larger than the size D in the width direction of the opening portion of the pressure chamber 210. The size L in the depth direction is set to be larger than the size D in the width direction. Therefore, the pressure applied to the liquid in the pressure chamber 210 may delay an escape to the chemical liquid holding container 22 by a vibration of the diaphragm 120 of the nozzle plate 100.

In the pressure chamber structure 200, the side on which the diaphragm 120 of the pressure chamber 210 is disposed is referred to as a first surface 200a and the side on which the warp reduction film 220 is disposed is referred to as a second surface 200b. The chemical liquid holding container 22 is adhered to the side of the warp reduction film 220 of the pressure chamber structure 200 by, for example, an epoxy type adhesive. The pressure chamber 210 of the pressure chamber structure 200 is connected to the bottom surface opening portion 22a of the chemical liquid holding container 22 by an opening portion of the side of the warp reduction film 220.

The diaphragm 120 deforms in the thickness direction by an operation of the driving element 130 of a surface shape. The chemical liquid discharging device 2 discharges the liquid supplied to the nozzle 110 by a pressure change generated in the pressure chamber 210 of the pressure chamber structure 200 due to the deformation of the diaphragm 120.

Next, a control system of the discharging system 500 will be described.

As described above, the discharging system 500 includes the chemical liquid dispensing apparatus 1, the chemical liquid discharging device 2, the host computer 18, the server 50 and the like.

The host computer 18 controls the chemical liquid dispensing apparatus 1 according to a user operation. The host computer 18 includes an operation unit 18a, a display unit 18b, and the like. The host computer 18 is configured with a processor, a RAM, a ROM, a non-volatile memory (NVM), and the like.

The operation unit 18a receives an operation instruction from the user. For example, the operation unit 18a is a keyboard, a mouse, a touch panel, or the like.

The display unit 18b displays various kinds of information by a control of the processor 15. For example, the display unit 18b includes a liquid crystal display. When the operation unit 18a includes a touch panel or the like, the display unit 18b may be integrated with the operation unit 18a.

The host computer 18 receives various inputs through the operation unit 18a. For example, the host computer 18 receives an input indicating that the chemical liquid holding container 22 has been filled with a liquid. The host computer 18 receives an input selection for discharging the liquid from the chemical liquid holding container 22.

When the host computer 18 receives the input selection for discharging the liquid from the chemical liquid holding container 22, the host computer 18 transmits a discharge signal for discharging the liquid to the chemical liquid dispensing apparatus 1.

The host computer 18 may receive inputs for each chemical liquid holding container 22. For example, the host computer 18 may receive an input indicating that the chemical liquid holding container 22 has been filled with a liquid or an input selection for discharging a liquid for each chemical liquid holding container 22.

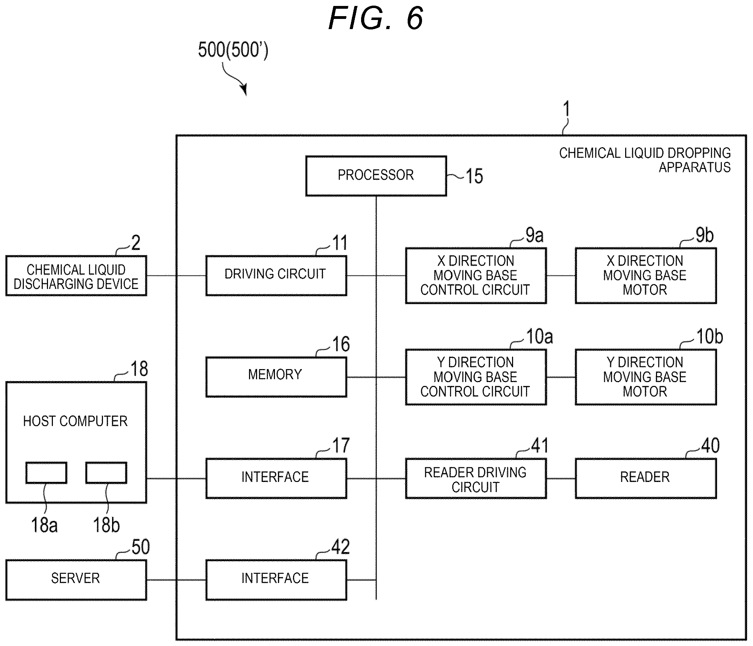

As shown in Fig. 6, the chemical liquid dispensing apparatus 1 includes the X direction moving base control circuit 9a, the X direction moving base motor 9b, the Y direction moving base control circuit 10a, the Y direction moving base motor 10b, the driving circuit 11, the processor 15, the memory 16, the interface 17, the reader 40, a reader driving circuit 41, an interface 42, and the like. Such units are connected to each other through a data bus. The chemical liquid dispensing apparatus 1 may have more elements in addition to the elements depicted in Fig. 6, or some of the elements depicted in Fig. 6 may be omitted in some embodiments.

The processor 15 (also referred to as a control unit or a first control unit) has a function of controlling all operations of the chemical liquid dispensing apparatus 1. The processor 15 may include an internal cache, various interfaces, and the like. The processor 15 realizes various processes by executing a program stored in advance in the internal cache, the memory 16, or the like.

Some of the various functions realized by the execution of the program by the processor 15 may be realized by a hardware circuit. In this case, the processor 15 controls a function executed by the hardware circuit.

The memory 16 stores various data. For example, the memory 16 stores a control program, a control data, and the like. The control program and the control data are incorporated in advance according to a specification of the chemical liquid dispensing apparatus 1. The control program is a program or the like supporting the function realized by the chemical liquid dispensing apparatus 1.

The memory 16 temporarily stores data or the like under processing of the processor 15. The memory 16 may store data necessary for executing an application program, an execution result of the application program, and the like.

The interface 17 is an interface for communicating data to and from the host computer 18. For example, the interface 17 is connected to the host computer 18 through a wired or wireless line. For example, the interface 17 may support a LAN connection, a USB connection, or a Bluetooth^{®} connection.

The interface 42 (referred to as a first interface) is an interface for communicating data to and from the server 50. For example, the interface 42 is connected to the server 50 through a wired or wireless line. For example, the interface 42 may support a LAN connection, a USB connection, or a Bluetooth connection.

The interfaces 17 and 42 may be integrally formed.

The X direction moving base control circuit 9a drives the X direction moving base motor 9b based on a signal from the processor 15. The X direction moving base control circuit 9a drives the X direction moving base motor 9b by supplying a signal or electric power to the X direction moving base motor 9b.

The X direction moving base motor 9b moves the X direction moving base 9 in the X direction. For example, the X direction moving base motor 9b is connected to the X direction moving base 9 through a gear or the like and moves the X direction moving base 9 in the X direction.

The Y direction moving base control circuit 10a drives the Y direction moving base motor 10b based on a signal from the processor 15. The Y direction moving base control circuit 10a drives the Y direction moving base motor 10b by supplying a signal or electric power to the Y direction moving base motor 10b.

The Y direction moving base motor 10b moves the Y direction moving base 10 in the Y direction. For example, the Y direction moving base motor 10b is connected to the Y direction moving base 10 through a gear or the like and moves the Y direction moving base 10 in the Y direction.

The reader driving circuit 41 drives the reader 40 according to a signal from the processor 15. For example, the reader driving circuit 41 supplies electric power to the reader 40. The reader driving circuit 41 transmits data output from the reader 40 to the processor 15.

The chemical liquid discharging device 2, the driving circuit 11 and the reader 40 are as described above.

Next, the server 50 will be described.

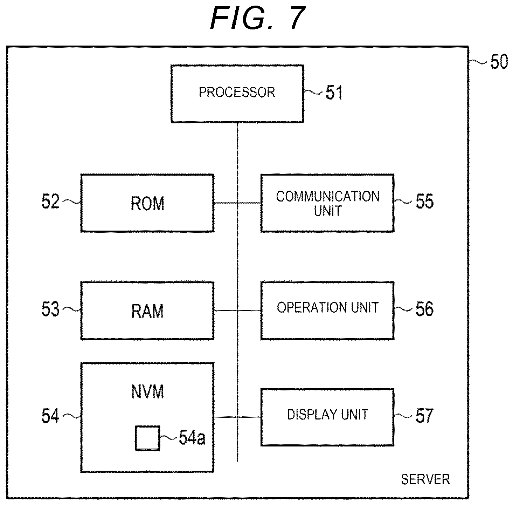

Fig. 7 shows a configuration example of the server 50.

In Fig. 7, the server 50 includes a processor 51, a ROM 52, a RAM 53, a non-volatile memory (NVM) 54 (referred to as a storage unit), a communication unit 55, an operation unit 56, a display unit 57, and the like. Such units are connected to each other through a data bus. The server 50 may have more elements in addition to the elements depicted in Fig. 7, or some of the elements depicted in Fig. 7 may be omitted in some embodiments.

The processor 51 (referred to as a second control unit) has a function of controlling all operations of the server 50. The processor 51 may include an internal cache, various interfaces, and the like. The processor 51 realizes various processes by executing a program stored in advance in the internal memory, the ROM 52, or the NVM 54 in.

Some of the various functions realized by the execution of the program by the processor 51 may be realized by a hardware circuit. In this case, the processor 51 controls a function executed by the hardware circuit.

The ROM 52 is a nonvolatile memory in which a control program, control data, and the like are stored in advance. The control program and the control data stored in the ROM 52 are incorporated in advance according to a specification of the server 50. For example, the ROM 52 stores a program (for example, BIOS) for controlling a circuit board of the server 50.

The RAM 53 is a volatile memory. The RAM 53 temporarily stores data or the like during processing of the processor 51. The RAM 53 stores various application programs based on instructions from the processor 51. The RAM 53 may store data necessary for executing the application program, an execution result of the application program, and the like.

The NVM 54 is a nonvolatile memory capable of writing and rewriting data. For example, the NVM 54 is configured with a Hard Disk Drive (HDD), a Solid State Drive (SSD), an EEPROM^{®} (registered trademark), a flash memory, or the like. The NVM 54 stores a control program, an application, various data, and the like according to intended operations of the server 50.

The NVM 54 includes a storage area 54a that stores the use history. The use history will be described in detail later.

The communication unit 55 (referred to as a second interface) is an interface for communicating data to and from the chemical liquid dispensing apparatus 1. For example, the communication unit 55 is connected to the chemical liquid dispensing apparatus 1 through a wired or wireless line. For example, the communication unit 55 may support a LAN connection, a USB connection, or a Bluetooth connection.

The operation unit 56 receives an operation instruction from the user. The operation unit 56 transmits a signal indicating the received instruction to the processor 51. For example, the operation unit 56 includes a keyboard, a ten key, and a touch panel.

The display unit 57 displays various kinds of information by a control of the processor 51. For example, the display unit 57 includes a liquid crystal display. When the operation unit 56 includes a touch panel or the like, the display unit 57 may be integrated with the operation unit 56.

Next, the use history stored in the storage area 54a will be described.

The storage area 54a stores the use history for each chemical liquid discharging device 2. For example, the storage area 54a stores an identifier obtained by decoding the code 29 and a use history specific to the chemical liquid discharging device corresponding to the identifier.

The use history indicates whether or not the corresponding chemical liquid discharging device 2 has been used. The use history may also indicate whether or not the liquid has been discharged from the chemical liquid discharging device 2. When the chemical liquid discharging device 2 has discharged a liquid once from at least one chemical liquid holding container 22, the use history indicates that the chemical liquid discharging device 2 has been used.

The use history may be recorded in a bit or the like indicating whether or not the chemical liquid discharging device 2 has been used. For example, "0" indicates that the chemical liquid discharging device 2 has not been used (that is unused), "1" indicates that the chemical liquid discharging device 2 has been used.

The use history may be entered by a user through the operation unit 56. For example, the user stores the use history of the chemical liquid dispensing apparatus 1 mounted on the chemical liquid dispensing apparatus 1 in the storage area 54a through the operation unit 56 or the like. Prior to an initial use of the chemical liquid discharging device 2, the use history indicates that the corresponding chemical liquid discharging device 2 has not been used (unused).

Next, a function realized by the processor 51 of the server 50 will be described. The following function is realized by the processor 51 executing the program stored in the NVM 54 or the like.

First, the processor 51 has a function of transmitting the use history to the chemical liquid dispensing apparatus 1 through the communication unit 55.

The processor 51 receives an acquisition request to acquire a use history corresponding to a chemical liquid discharging device 2 through the communication unit 55. The acquisition request may include an identifier for specifying the chemical liquid discharging device 2. When the processor 51 receives the acquisition request, the processor 51 acquires the use history of the chemical liquid discharging device 2 from the storage area 54a. The processor 51 may acquire the use history corresponding to the identifier included in the acquisition request. When the processor 51 acquires the use history, the processor 51 transmits a response including the use history to the chemical liquid dispensing apparatus 1 through the communication unit 55.

The processor 51 has a function of rewriting the use history according to an update request from the chemical liquid dispensing apparatus 1.

The processor 51 receives the update request for rewriting the use history to indicate that the chemical liquid discharging device 2 has been used from the chemical liquid dispensing apparatus 1 through the communication unit 55. When the processor 51 receives the update request, the processor 15 rewrites the use history (e.g., in a bit) indicating that the chemical liquid discharging device 2 has been used the storage area 54a. The processor 51 may store the use history indicating that the chemical liquid discharging device 2 corresponding to the identifier included in the update request has been previously used in the storage area 54a.

When the processor 51 rewrites the use history to indicate that the chemical liquid discharging device 2 has been used in the storage area 54a, the processor 51 transmits a response indicating that the rewriting is successful to the chemical liquid dispensing apparatus 1 through the communication unit 55.

When the processor 51 stores the information indicating that the chemical liquid discharging device 2 has been used as the use history, the processor 51 may lock the storage area 54a from further rewriting of the corresponding use history.

Next, the function realized by the processor 15 of the chemical liquid dispensing apparatus 1 will be described. The following function is realized by the processor 15 executing the program stored in the memory 16 or the like.

First, the processor 15 has a function of acquiring the identifier from the chemical liquid discharging device 2.

The processor 15 determines whether or not the chemical liquid discharging device 2 is set in the mounting module 5. For example, the processor 15 determines whether or not the chemical liquid discharging device 2 is set in the mounting module 5 according to a signal from a sensor (not specifically depicted).

When it is determined that the chemical liquid discharging device 2 is set in the mounting module 5, the processor 15 acquires (e.g., causes to read and decode) the code 29 on the chemical liquid discharging device 2 through the reader 40. The reader 40 transmits the decoded code to the processor 15. The processor 15 acquires the identifier indicating the chemical liquid discharging device 2 based on the decoded code transmitted from the reader 40. The processor 15 may decode the code 29 that is read by the reader 40.

The processor 15 has a function of acquiring the use history of the chemical liquid discharging device 2 corresponding to the acquired identifier from the server 50.

The processor 15 generates the acquisition request for acquiring the use history of the corresponding chemical liquid discharging device 2. The processor 15 may store the obtained identifier in the acquisition request. When the processor 15 generates the acquisition request, the processor 15 transmits the acquisition request to the server 50 through the interface 42.

The processor 15 receives a response including the use history of the chemical liquid discharging device 2 corresponding to the identifier as a response to the acquisition request from the server 50.

The processor 15 has a function of discharging the liquid from the chemical liquid discharging device 2 based on the acquired use history.

When it is determined that the chemical liquid discharging device 2 has not been used based on the acquired use history, the processor 15 causes a liquid to be discharged from the chemical liquid discharging device 2.

For example, the user supplies a predetermined amount of the liquid to the chemical liquid holding container 22 from the top surface opening portion 22b of the chemical liquid holding container 22 by a pipette or the like. The liquid is held inside the chemical liquid holding container 22. The bottom surface opening portion 22a of the bottom portion of the chemical liquid holding container 22 is connected to the chemical liquid discharge array 27. The liquid in the chemical liquid holding container 22 is filled in each pressure chamber 210 of the chemical liquid discharge array 27 through the bottom surface opening portion 22a of the bottom surface of the chemical liquid holding container 22.

The liquid in the chemical liquid discharging device 2 includes any of, for example, a low molecular weight compound, a fluorescent reagent, a protein, an antibody, a nucleic acid, a plasma, a bacteria, a blood cell or a cell. In general, a main solvent in the liquid (substance having the largest weight ratio or volume ratio) is water, glycerin, or dimethylsulfoxide.

The user inputs an operation instruction for discharging the liquid to the operation unit 18a of the host computer 18. The user may input the operation instruction for discharging the liquid from a specific chemical liquid holding container 22.

When the host computer 18 receives the operation of discharging the liquid, the host computer 18 transmits a discharge signal instructing the discharge of the liquid with respect to the chemical liquid dispensing apparatus 1. The discharge signal may be an instruction of the discharge of the liquid from a specific chemical liquid holding container 22.

The processor 15 receives the discharge signal through the interface 17. When the acquired use history indicates that the chemical liquid discharging device 2 has not been used, the processor 15 causes the chemical liquid discharging device 2 to discharge the liquid based on the discharge signal.

The processor 15 controls the X direction moving base motor 9b and the Y direction moving base motor 10b to move the chemical liquid discharging device 2 set in the mounting module 5 to a predetermined position. For example, the processor 15 moves the chemical liquid discharging device 2 to a position where the plurality of nozzles 110 is inserted into a well 300. The processor 15 may move the chemical liquid discharging device 2 to the predetermined position according to the discharge signal.

When the chemical liquid discharging device 2 is moved to the predetermined position, the processor 15 applies a voltage for discharging the liquid to the driving element 130 using the driving circuit 11.

The processor 15 transmits a signal to the driving circuit 11, and a voltage control signal is input from the driving circuit 11 to the driving element 130. In response to the application of the voltage control signal, the driving element 130 deforms the diaphragm 120 to change the volume of the pressure chamber 210. Therefore, the liquid is discharged as a droplet from the nozzle 110 of the chemical liquid discharge array 27. As a result, the chemical liquid discharging device 2 dispenses a predetermined amount of liquid from the nozzle 110 to the well 300 of the microplate 4.

To dispense the predetermined amount of liquid to each well 300 of the microplate 4, the processor 15 repeats an operation instruction for transmitting a signal to the X direction moving base control circuit 9a, the Y direction moving base control circuit 10a, and the driving circuit 11.

The number of times and the position at which the processor 15 causes the liquid to be discharged are not limited to a specific configuration.

When it is determined that the chemical liquid discharging device 2 has not been used based on the acquired use history, the processor 15 may transmit a signal indicating that the chemical liquid discharging device 2 has not been used to the host computer 18. The host computer 18 may display that the chemical liquid discharging device 2 has not been used on the display unit 18b or the like, based on the corresponding signal.

When it is determined that the chemical liquid discharging device 2 has been used based on the acquired use history, the processor 15 does not causes the liquid to be discharged from the chemical liquid discharging device 2.

When it is determined that the chemical liquid discharging device 2 has been used based on the acquired use history, the processor 15 does not causes the liquid to be discharged even when the processor 15 receives the discharge signal. The processor 15 transmits a signal indicating that the chemical liquid discharging device 2 has been used to the host computer 18 through the interface 17.

When the host computer 18 receives the signal, the host computer 18 displays a warning or the like indicating that the chemical liquid discharging device 2 has been used on the display unit 18b or the like.

The processor 15 has a function of transmitting the update request for storing the information indicating that the chemical liquid discharging device 2 has been used for rewriting the use history of the corresponding chemical liquid discharging device 2 in the server 50 when the processor 15 causes the liquid to be discharged.

When the discharge of the liquid has been completed, the processor 15 generates the update request for rewriting the use history to indicate that the chemical liquid discharging device 2 has been used. For example, the processor 15 stores the acquired identifier in the update request. When the processor 15 generates the update request, the processor 15 transmits the generated update request to the server 50 through the interface 42.

The processor 15 receives a response indicating that the rewriting has been completed from the server 50 through the interface 42. When the processor 15 receives a response indicating that the rewriting has been failed or when the processor 15 does not receive the response, the processor 15 may transmit the generated update request to the server 50 again.

Next, an operation example of the processor 15 of the chemical liquid dispensing apparatus 1 will be described.

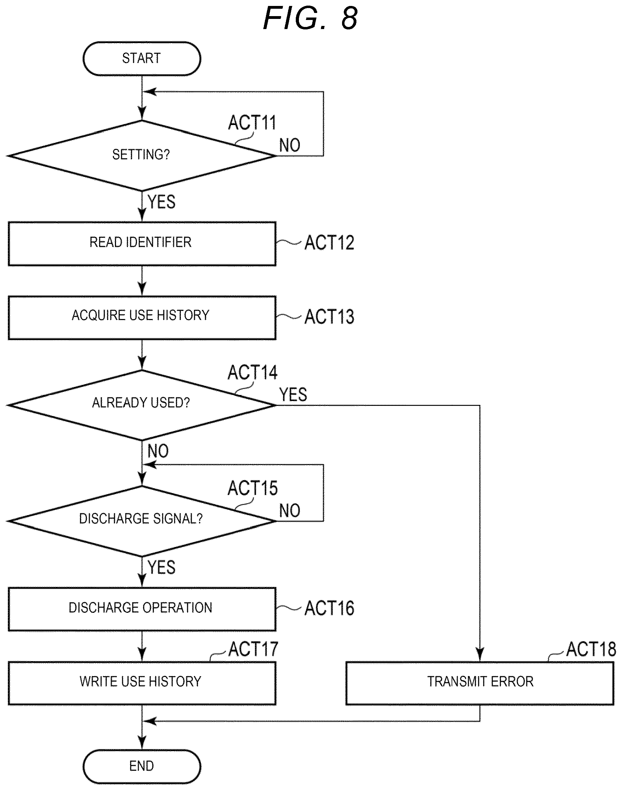

Fig. 8 is a flowchart for describing an operation example of the processor 15 of the chemical liquid dispensing apparatus 1.

First, the processor 15 determines whether or not the chemical liquid discharging device 2 is set in the mounting module 5 (ACT11). When it is determined that the chemical liquid discharging device 2 is not set in the mounting module 5 (ACT11, NO), the processor 15 causes the process to return to ACT11.

When it is determined that the chemical liquid discharging device 2 is set in the mounting module 5 (ACT11, YES), the processor 15 reads the identifier from the code 29 on the chemical liquid discharging device 2 (ACT12). When the processor 15 reads the identifier, the processor 15 acquires the use history of the chemical liquid discharging device 2 corresponding to the identifier from the sever 50 (ACT13).

When the processor 15 acquires the use history, the processor 15 determines whether or not the chemical liquid discharging device 2 has been used according to the use history (ACT14).

When it is determined that the chemical liquid discharging device 2 has not been used (is previously unused) according to the use history (ACT14, NO), the processor 15 determines whether or not the discharge signal has been received through the interface 17 (ACT15). When it is determined that the discharge signal has not been received through the interface 17 (ACT15, NO), the processor 15 causes the process to return to ACT15.

When it is determined that the discharge signal has been received through the interface 17 (ACT15, YES), the processor 15 causes the chemical liquid discharging device 2 to discharge the liquid according to the discharge signal (ACT16).

When the chemical liquid discharging device 2 is caused to discharge the liquid, the processor 15 transmits the update request for rewriting the use history to indicate that the chemical liquid discharging device 2 has been used to the server 50 (ACT 17).

When it is determined that the chemical liquid discharging device 2 has been used according to the use history (ACT14, YES), the processor 15 transmits the signal indicating that the chemical liquid discharging device 2 has been used to the host computer 18 through the interface 17 (ACT18).

When the use history indicating that the chemical liquid discharging device has been used is stored in the server 50 (ACT17), or when the signal indicating that the chemical liquid discharging device 2 has been used is transmitted to the host computer 18 (ACT18), the processor 15 ends the operation.

The chemical liquid discharging device 2 may include an IC module or a Radio Frequency Identifier (RFID) storing the identifier. In this case, the chemical liquid dispensing apparatus 1 includes a reader that read the identifier from the IC module or the RFID. The processor 15 of the chemical liquid dispensing apparatus 1 acquires the identifier from the IC module or the RFID.

The chemical liquid discharging device 2 may include a character string indicating the identifier. In this case, the chemical liquid dispensing apparatus 1 includes a camera or the like that images the character string. The processor 15 of the chemical liquid dispensing apparatus 1 performs an Optical Character Recognition (OCR) process or the like on a captured including the character string to acquire the identifier.

The chemical liquid discharging device 2 may indicate the identifier by the shape of the base member 21 or the like. In this case, the processor 15 of the chemical liquid dispensing apparatus 1 may acquire the identifier using a captured image indicating the shape.

The host computer 18 and the server 50 may be integrally formed. For example, the host computer 18 may have a function of the server 50.

The storage area 54a of the server 50 may store the use history of each chemical liquid holding container 22 of the chemical liquid discharging device 2. That is, the storage area 54a stores information indicating whether or not the chemical liquid holding container 22 has been used.

The processor 15 acquires the use history of the chemical liquid holding container 22 specified by the identifier from the server 50. When the processor 15 acquires the use history, the processor 15 receives the discharge signal from the host computer 18. When the discharge signal is received, the processor 15 determines whether or not the chemical liquid holding container 22 has been used according to the use history. When it is determined that the chemical liquid holding container 22 has not been used (that is unused) by the use history, the processor 15 causes the liquid to be discharged from the chemical liquid holding container 22 according to the discharge signal. When the discharge operation has been completed, the processor 15 transmits an update request for rewriting the use history to indicate that the chemical liquid holding container 22 has been used to the server 50.

When it is determined that the chemical liquid holding container 22 has been used according to the use history, the processor 15 will not perform the discharge operation even when the processor 15 receives the discharge signal. In this case, the processor 15 may transmit a signal indicating that the chemical liquid holding container 22 has been used to the host computer 18.

The discharging system configured as described above acquires the identifier from the liquid discharging device. The discharging system acquires the use history of the chemical liquid discharging device corresponding to the identifier from the server. The discharging system checks the use history before the liquid is discharged from the liquid discharging device. When it is determined that the liquid discharging device has been used by the use history, the discharging system will not cause the liquid discharging device to discharge the liquid.

Once the liquid discharging device has discharged the liquid, the discharging system updates the use history indicating that the liquid discharging device has been used in the server.

As a result, the discharging system can prevent the discharge of a liquid via the reuse of a liquid discharging device that has been previously used.

### (Second Embodiment)

A chemical liquid dispensing apparatus 1 according to a second embodiment is different from that of the first embodiment in that the chemical liquid dispensing apparatus 1 according to the second embodiment transmits an update request for updating the use history to indicate that the chemical liquid discharging device 2 has been used once the chemical liquid holding container 22 has been filled with the liquid. Therefore, the same reference numerals are used for the components that are substantially the same as those of the first embodiment, and the description of repeated components may be omitted.

The host computer 18 receives an input indicating that the chemical liquid holding container 22 has been filled with the liquid through the operation unit 18a. For example, when the chemical liquid holding container 22 has been filled with the liquid, the user enters an input that indicates filling has been completed to the operation unit 18a.

When the host computer 18 receives an input indicating the chemical liquid holding container 22 has been filled with the liquid, the host computer 18 transmits a filling signal indicating that the chemical liquid holding container 22 has been filled with the liquid to the chemical liquid dispensing apparatus 1 through the interface 17.

Next, the function realized by the processor 15 of the chemical liquid dispensing apparatus 1 will be described. The following function is realized by the processor 15 executing the program stored in the memory 16 or the like.

The processor 15 has a function of detecting that the chemical liquid holding container 22 is filled with the liquid.

For example, the processor 15 determines whether or not the filling signal has been received from the host computer 18. When it is determined that the filling signal has been received from the host computer 18, the processor 15 determines that the chemical liquid holding container 22 has been filled with the liquid.

The chemical liquid dispensing apparatus 1 or the chemical liquid discharging device 2 may include a sensor for detecting a filling of the chemical liquid holding container 22 with the liquid. The processor 15 may detect a filling of the chemical liquid holding container 22 using the corresponding sensor.

A method of detecting a filling of the chemical liquid holding container 22 by the processor 15 is not limited to any specific method.

The processor 15 has a function of transmitting the update request for rewriting the use history of the chemical liquid discharging device 2 when the processor 15 detects that the chemical liquid holding container 22 has been filled with the liquid.

The operation of transmitting the update request for rewriting the use history of the chemical liquid discharging device 2 in the server 50 by the processor 15 is the same as that of the first embodiment, and thus detailed descriptions thereof are omitted.

Next, an operation example of the processor 15 of the chemical liquid dispensing apparatus 1 will be described.

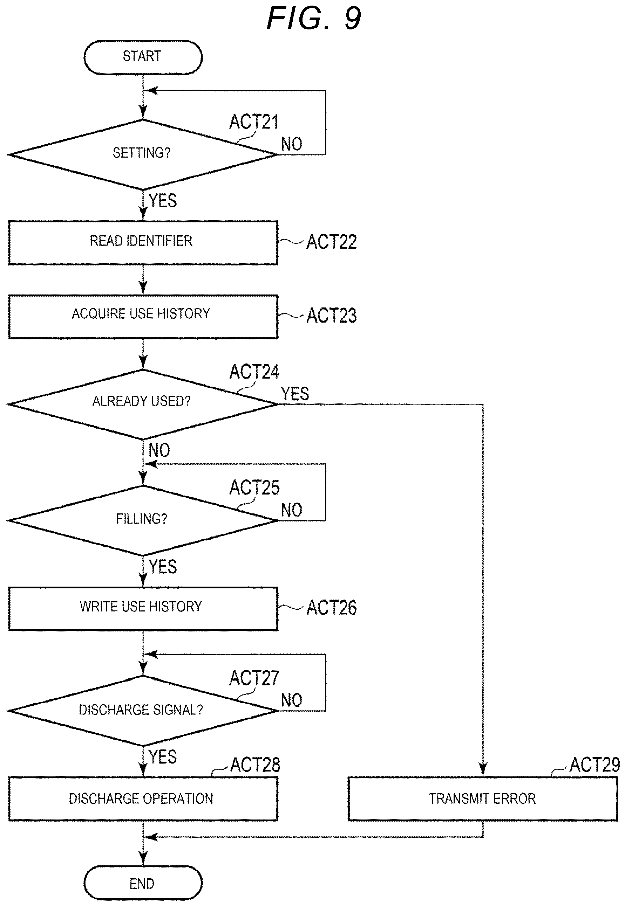

Fig. 9 is a flowchart for describing an operation example of the processor 15 of the chemical liquid dispensing apparatus 1.

First, the processor 15 determines whether or not the chemical liquid discharging device 2 is set in the mounting module 5 (ACT21). When it is determined that the chemical liquid discharging device 2 is not set in the mounting module 5 (ACT21, NO), the processor 15 causes the process to return to ACT21.

When it is determined that the chemical liquid discharging device 2 is set in the mounting module 5 (ACT21, YES), the processor 15 reads the identifier from the code 29 of the chemical liquid discharging device 2 (ACT22). When the processor 15 reads the identifier, the processor 15 acquires the use history of the chemical liquid discharging device 2 specified by the identifier from the server 50 (ACT23).

When the processor 15 acquires the use history, the processor 15 determines whether or not the chemical liquid discharging device 2 specified by the identified has been used according to the use history (ACT24).

When it is determined that the chemical liquid discharging device 2 has not been used (is previously unused) according to the use history (ACT24, NO), the processor 15 determines whether or not the filling signal has been received through the interface 17 (ACT25). When it is determined that the filling signal has not been received through the interface 17 (ACT25, NO), the processor 15 returns to ACT25.

When it is determined that the filling signal has been received through the interface 17 (ACT25, YES), the processor 15 transmits the update request for rewriting the use history to indicate that the chemical liquid discharging device 2 has been used (ACT26).

When the update request for rewriting the use history to indicate that the chemical liquid discharging device 2 has been used is transmitted, the processor 15 determines whether or not the discharge signal has been received through the interface 17 (ACT27). When it is determined that the discharge signal has not been received through the interface 17 (ACT27, NO), the processor 15 causes the process to return to ACT27.

When it is determined that the discharge signal has been received through the interface 17 (ACT27, YES), the processor 15 causes the chemical liquid discharging device 2 to discharge the liquid according to the discharge signal (ACT28).

When it is determined that the chemical liquid discharging device 2 has been previously used according to the use history (ACT24, YES), the processor 15 transmits the signal indicating that the chemical liquid discharging device 2 has been used to the host computer 18 through the interface 17 (ACT29).

When the chemical liquid discharging device 2 is caused to discharge the liquid (ACT28), or when the signal indicating that the chemical liquid discharging device 2 has been previously used is transmitted to the host computer 18 (ACT29), the processor 15 ends the operation.

Similarly to the first embodiment, the storage area 54a of the server 50 may store the use history of each chemical liquid holding container 22 of the chemical liquid discharging device 2. That is, the storage area 54a stores information indicating whether or not the chemical liquid holding container 22 has been previously used for each chemical liquid holding container 22 of the chemical liquid discharging device 2.

For example, the processor 15 acquires the use history of each chemical liquid holding container 22 of the chemical liquid discharging device 2 specified by the identifier from the server 50. When the processor 15 acquires the use history, the processor 15 receives the filling signal from the host computer 18. When the processor 15 receives the filling signal, the processor 15 determines whether or not the corresponding chemical liquid holding container 22 has been used according to the use history corresponding to the chemical liquid holding container 22 indicated filled by the filling signal. When it is determined that the chemical liquid holding container 22 has not been used (unused) according to the use history, the processor 15 transmits an update request for rewriting the use history to indicate the chemical liquid holding container 22 has been used to the server 50.

When it is determined that the chemical liquid holding container 22 has been used according to the use history, the processor 15 will not perform the discharge operation even when the processor 15 receives the discharge signal. In this case, the processor 15 may transmit a signal indicating that the chemical liquid holding container 22 has been previously used to the host computer 18.

The discharging system configured as described above transmits the update request for rewriting the use history of the liquid discharging device to indicate that the liquid discharging device has been used to the server once the liquid holding container has been filled with the liquid. As a result, the discharging system can store the information indicating that the liquid discharging device has been used in the server even when the discharge operation of the liquid from the liquid holding container filled with the liquid will not be performed.

Therefore, the discharging system can prevent contamination even when the discharge operation of the liquid from the liquid holding container filled with the liquid is not performed.

### (Third Embodiment)

A liquid discharging device according to a third embodiment is different from that of the first embodiment in that the liquid discharging device according to the third embodiment discharges the liquid by a thermal jet method. Therefore, the same reference numerals are used for the components that are substantially the same as those of the first embodiment, and the description of repeated components may be omitted.

The discharging system 500' according to the third embodiment includes a chemical liquid discharging device 2'.

The chemical liquid discharging device 2' includes a chemical liquid discharge array 27' in place of the chemical liquid discharge array 27.

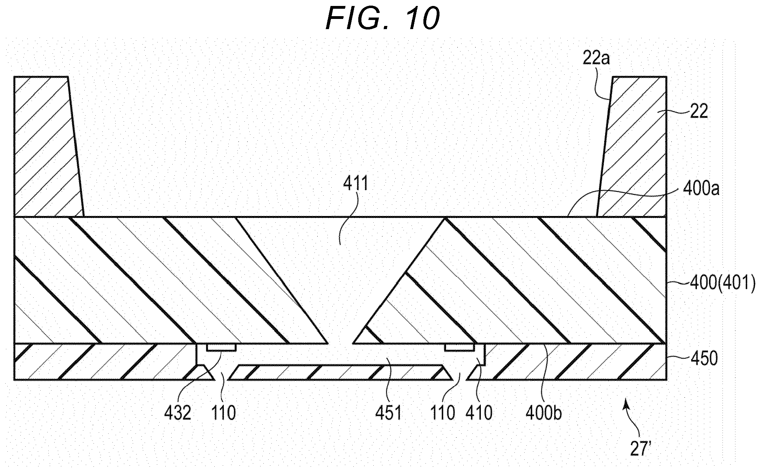

Fig. 10 is a cross-sectional view taken along a line F10-F10 of Fig. 4.

As shown in Fig. 10, the chemical liquid discharge array 27' is formed by laminating a silicon substrate 400 and a photosensitive resin 450. An inlet port 411 connected to the bottom surface opening portion 22a of the liquid outlet port of the chemical liquid holding container 22 is formed on a surface side (also referred to as a second surface 400a) of the silicon substrate 400. A thin film heat transfer heater 432 that is an actuator and a wiring that is connected to the thin film heat transfer heater 432 and is not shown in the drawing are formed on a rear surface side (also referred to as a first surface 400b) of the silicon substrate 400. The thin film heat transfer heater 432 is electrically connected to the electrode terminal connection portion 26.

The photosensitive resin 450 is a substrate on which a pressure chamber 410 is formed. A flow path 451 connected to the inlet port 411, the pressure chamber 410, and the nozzle 110 are formed on the photosensitive resin 450. The pressure chamber 410 is an area where the thin film heat transfer heater 432 is formed in the flow path 451. The thin film heat transfer heater 432 generates heat by electric power supplied from a wiring. The liquid in the pressure chamber 410 is heated and boiled by the thin film heat transfer heater 432, and thus the liquid is discharged from the nozzle 110.

For example, a plurality of nozzles 110 is arranged in six rows in the X direction and two rows in the Y direction. The plurality of nozzles 110 is positioned inside the bottom surface opening portion 22a of the liquid outlet port of the chemical liquid holding container 22.

Next, an operation of discharging the liquid will be described. The bottom surface opening portion 22a of the lower portion of the chemical liquid holding container 22 is connected to the inlet port 411 and the flow path 451 of the chemical liquid discharge array 27'. The liquid in the chemical liquid holding container 22 is filled from the bottom surface opening portion 22a of the chemical liquid holding container 22 to each pressure chamber 410 in the flow path 451 formed on the photosensitive resin 450 through the inlet port 411 formed on the silicon substrate 400.

In this state, the voltage control signal input to the control signal input terminal 25 of the electrical substrate wiring 24 from the driving circuit 11 is applied to a plurality of thin film heat transfer heater 432 of the chemical liquid discharge array 27'. Therefore, the plurality of thin film heat transfer heater 432 generates heat, and the liquid in the pressure chamber 410 is heated and boiled. As a result, the liquid is discharged from the nozzle 110 as a liquid droplet. A predetermined amount of liquid is dispensed from the nozzle 110 to the well 300 of the microplate 4.

In the thermal jet method, the liquid is come into contact with the thin film heat transfer heater 432 having a temperature equal to or higher than 300°C. Therefore, in the thermal jet method, it is preferable that the liquid have a high thermal heat resistance (that is, not be a material that is substantially deteriorated by contact with a heater having a temperature equal to or higher than 300°C).

The discharging system configured as described above acquires the identifier from the liquid discharging device. The discharging system acquires the use history of the liquid discharging device indicated by the identifier from the server. The discharging system checks the use history when the liquid is to be discharged from the liquid discharging device. When it is determined that the liquid discharging device has been previously used according to the use history, the discharging system will not discharge the liquid from the liquid discharging device.

When the liquid discharging device discharges the liquid, the discharging system stores the use history indicating that the liquid discharging device has been used in the server.

As a result, the discharging system can prevent the discharge of a liquid via the reuse of a liquid discharging device that has been previously used.

The discharging system 500' may have a characteristic of the second embodiment. That is, the processor 15 of the chemical liquid dispensing apparatus 1 of the discharging system 500' transmits the update request rewriting the use history to indicate that the chemical liquid discharging device 2 has been used in the server 50 when the processor 15 detects that the chemical liquid holding container 22 of the chemical liquid discharging device 2 has been filled with the liquid.

The liquid discharging device configured as described above has a simpler structure as compared to that required for a piezo jet method, and thus it is possible to miniaturize the actuator. Therefore, a liquid discharging device can have nozzles at a higher density that one based on the piezo jet method.

In the example embodiments described above, the driving element 130 has a circular shape. However, the shape of the driving unit is not limited. For example, the shape of the driving element 130 may be a diamond shape, an elliptical shape, or the like. The shape of the pressure chamber 210 is not limited to a circular shape, and the pressure chamber 210 may be a diamond shape, an elliptical shape, a rectangular shape, or the like.

In the example embodiments described above, the nozzle 110 is disposed at the center of the driving element 130. However, as long as the liquid of the pressure chamber 210 can be discharged, the position of the nozzle 110 is not particular limited. For example, the nozzle 110 may be formed on an outer periphery of the driving element 130 rather than within an interior region of the driving element 130.

While certain embodiments have been described, these embodiments have been presented by way of example only, and are not intended to limit the scope of the inventions. Indeed, the novel embodiments described herein may be embodied in a variety of other forms. Furthermore, various omissions, substitutions and changes in the form of the embodiments described herein may be made without departing from the scope of the inventions. The accompanying claims define the scope of the present invention.

## Claims

1. A liquid dispensing apparatus (1), comprising:
a base (3);
a mounting module (5) configured to mount a liquid discharging device (2) for discharging a liquid;
an interface (17, 42) configured to communicate with an external device (18, 50); and
a driving circuit (11) configured to supply driving voltages to an actuator (170) of the liquid discharging device (2),
**characterized by** comprising a reader (40) configured to acquire an identifier of the liquid discharging device, and a control unit (15) configured to:
determine whether a liquid discharging device is set in the mounting module,
upon determining that the liquid discharging device is set in the mounting module, acquire the identifier of the liquid discharging device,
generate a request to acquire a use history of the liquid discharging device and transmit the request including the acquired identifier to the external device through the interface, the use history being stored in the external device,
receive a response including the use history of the liquid discharging device from the external device, and
cause the driving circuit to supply a signal for discharging a liquid to the actuator if the acquired use history indicates that the liquid discharging device has not been used, wherein
the control unit is further configured not to cause the liquid to be discharged if the acquired use history indicates that the liquid discharging device has been used.

2. The apparatus according to claim 1, wherein the reader reads a code (29) on the liquid discharging device.

3. The apparatus according to claim 1 or 2, wherein the control unit is further configured to transmit an update request to the external device for updating the use history of the liquid discharging device stored in the external device, once the control unit causes the driving circuit to supply the signal to the actuator of the liquid discharging device.

4. The apparatus according to any one of claims 1 or 2, wherein the control unit is further configured to transmit an update request to the external device for updating the use history of the liquid discharging device stored in the external device, when the control unit detects that a liquid holding container (22) of the liquid discharging device has been filled with the liquid.

5. A liquid discharging system (500), comprising:
the liquid dispensing apparatus according to any one of claims 1 to 4; and
an external device, wherein the external device is an information processing device (50), comprising:
a storage unit (54) configured to store the use history;
a second interface (55) configured to communicate with the liquid dispensing apparatus; and
a second control unit (51) configured to transmit the use history from the storage unit to the liquid dispensing apparatus through the second interface.

6. The system according to claim 5, further comprising the liquid discharging device as defined in any one of claims 1 to 4.

7. The system according to claim 6, wherein the actuator of the liquid discharging device comprises a piezoelectric film.

8. The system according to claim 6, wherein the actuator of the liquid discharging device comprises a heater.

9. A method for discharging a liquid from a liquid dispensing apparatus (1), **characterised by**
the liquid dispensing apparatus comprising a reader (40) configured to acquire an identifier of a liquid discharging device,
the liquid dispensing apparatus further comprising a control unit (15),
the method comprising the following steps performed by the control unit:
determining that a liquid discharging device (2) is mounted on the liquid dispensing apparatus;
upon determining that the liquid discharging device is mounted on the liquid dispensing apparatus, acquiring an identifier of the liquid discharging device via a reader configured to acquire an identifier of the liquid discharging device;
generating a request to acquire a use history of the liquid discharging device and transmit the request including the acquired identifier to an external device (18, 50), the use history being stored in the external device;
receiving a response including the use history of the liquid discharging device from the external device;
supplying a first control signal to a driving circuit (11) of the liquid dispensing apparatus to drive an actuator (170) of the liquid discharging device to discharge a liquid when the use history indicates that the liquid discharging device has not been previously used, and not causing the liquid to be discharged when the use history indicates that the liquid discharging device has been used; and
transmitting an update request to the external device to update the use history of the liquid discharging device stored in the external device.

10. The method according to claim 9, further comprising:
transmitting a signal indicating that the liquid discharging device has been previously used when the use history indicates that the liquid discharging device has been previously used.

11. The method according to claim 9 or 10, wherein the driving circuit supplies a signal for discharging a liquid to the actuator in response to the first control signal, and the update request is transmitted to the external device when the driving circuit supplies the signal to the actuator.

12. The method according to claim 9 or 10, wherein the update request is transmitted to the external device when the liquid dispensing apparatus detects that a liquid holding container (22) of the liquid discharging device has been filled with the liquid.

## Patentansprüche

1. Flüssigkeitsabgabevorrichtung (1), umfassend:
eine Basis (3);
ein Montagemodul (5), das konfiguriert ist, um eine Flüssigkeitsausgabevorrichtung (2) zum Ausgeben einer Flüssigkeit zu montieren;
eine Schnittstelle (17, 42), die konfiguriert ist, um mit einer externen Vorrichtung (18, 50) zu kommunizieren; und
eine Ansteuerungsschaltung (11), die konfiguriert ist, um Ansteuerungsspannungen an einen Aktuator (170) der Flüssigkeitsausgabevorrichtung (2) bereitzustellen,
**dadurch gekennzeichnet, dass** sie ein Lesegerät (40), das konfiguriert ist, um eine Kennung der Flüssigkeitsausgabevorrichtung zu erfassen, und eine Steuereinheit (15) umfasst, die zu Folgendem konfiguriert ist:
Bestimmen, ob eine Flüssigkeitsausgabevorrichtung in das Montagemodul eingesetzt ist,
bei Bestimmen, dass die Flüssigkeitsausgabevorrichtung in das Montagemodul eingesetzt ist, Erfassen der Kennung der Flüssigkeitsausgabevorrichtung,
Erzeugen einer Anforderung zum Erfassen einer Nutzungshistorie der Flüssigkeitsausgabevorrichtung und Übertragen der Anforderung einschließlich der erfassten Kennung über die Schnittstelle an die externe Vorrichtung, wobei die Nutzungshistorie in der externen Vorrichtung gespeichert wird,
Empfangen einer Antwort einschließlich der Nutzungsgeschichte der Flüssigkeitsausgabevorrichtung von der externen Vorrichtung, und
Veranlassen der Ansteuerungsschaltung, ein Signal zum Ausgeben einer Flüssigkeit an den Aktuator bereitzustellen, wenn die erfasste Nutzungshistorie angibt, dass die Flüssigkeitsausgabevorrichtung nicht benutzt worden ist, wobei
die Steuereinheit ferner konfiguriert ist, um das Ausgeben der Flüssigkeit nicht zu veranlassen, wenn die erfasste Nutzungshistorie angibt, dass die Flüssigkeitsausgabevorrichtung benutzt worden ist.

2. Vorrichtung nach Anspruch 1, wobei das Lesegerät einen Code (29) auf der Flüssigkeitsausgabevorrichtung liest.

3. Vorrichtung nach Anspruch 1 oder 2, wobei die Steuereinheit ferner konfiguriert ist, um eine Aktualisierungsanforderung an die externe Vorrichtung zu übertragen, um die in der externen Vorrichtung gespeicherte Nutzungshistorie der Flüssigkeitsausgabevorrichtung zu aktualisieren, sobald die Steuereinheit die Ansteuerungsschaltung veranlasst, das Signal dem Aktuator der Flüssigkeitsausgabevorrichtung zuzuführen.

4. Vorrichtung nach einem der Ansprüche 1 oder 2, wobei die Steuereinheit ferner konfiguriert ist, um eine Aktualisierungsanforderung an die externe Vorrichtung zu übertragen, um die in der externen Vorrichtung gespeicherte Nutzungshistorie der Flüssigkeitsausgabevorrichtung zu aktualisieren, wenn die Steuereinheit erkennt, dass ein Flüssigkeitsbehälter (22) der Flüssigkeitsausgabevorrichtung mit der Flüssigkeit gefüllt worden ist.

5. Flüssigkeitsausgabesystem (500), umfassend:
die Flüssigkeitsausgabevorrichtung nach einem der Ansprüche 1 bis 4; und
eine externe Vorrichtung, wobei die externe Vorrichtung eine Informationsverarbeitungsvorrichtung (50) ist, umfassend:
eine Speichereinheit (54), die konfiguriert ist, um die Nutzungshistorie zu speichern;
eine zweite Schnittstelle (55), die konfiguriert ist, um mit der Flüssigkeitsabgabevorrichtung zu kommunizieren; und
eine zweite Steuereinheit (51), die konfiguriert ist, um die Nutzungshistorie von der Speichereinheit über die zweite Schnittstelle an die Flüssigkeitsabgabevorrichtung zu übertragen.

6. System nach Anspruch 5, ferner umfassend die Flüssigkeitsausgabevorrichtung wie definiert in einem der Ansprüche 1 bis 4.

7. System nach Anspruch 6, wobei der Aktuator der Flüssigkeitsausgabevorrichtung einen piezoelektrischen Film umfasst.

8. System nach Anspruch 6, wobei der Aktuator der Flüssigkeitsausgabevorrichtung eine Heizung umfasst.

9. Verfahren zum Ausgeben einer Flüssigkeit aus einer Flüssigkeitsabgabevorrichtung (1), **dadurch gekennzeichnet, dass**
die Flüssigkeitsabgabevorrichtung ein Lesegerät (40) umfasst, das konfiguriert ist, um eine Kennung einer Flüssigkeitsausgabevorrichtung zu erfassen,
die Flüssigkeitsabgabevorrichtung ferner eine Steuereinheit (15) umfasst,
das Verfahren umfassend die folgenden Schritte, die von der Steuereinheit durchgeführt werden:
Bestimmen, dass eine Flüssigkeitsausgabevorrichtung (2) an der Flüssigkeitsabgabevorrichtung montiert ist;
bei Bestimmen, dass die Flüssigkeitsausgabevorrichtung an der Flüssigkeitsabgabevorrichtung montiert ist, Erfassen einer Kennung der Flüssigkeitsausgabevorrichtung über ein Lesegerät, das konfiguriert ist, um eine Kennung der Flüssigkeitsausgabevorrichtung zu erfassen;
Erzeugen einer Anforderung zum Erfassen einer Nutzungshistorie der Flüssigkeitsausgabevorrichtung und Übertragen der Anforderung einschließlich der erfassten Kennung an eine externe Vorrichtung (18, 50), wobei die Nutzungshistorie in der externen Vorrichtung gespeichert ist;
Empfangen einer Antwort einschließlich der Nutzungsgeschichte der Flüssigkeitsausgabevorrichtung von der externen Vorrichtung;
Zuführen eines ersten Steuersignals zu einer Ansteuerungsschaltung (11) der Flüssigkeitsabgabevorrichtung, um einen Aktuator (170) der Flüssigkeitsausgabevorrichtung anzusteuern, um eine Flüssigkeit auszugeben, wenn die Nutzungshistorie angibt, dass die Flüssigkeitsabgabevorrichtung zuvor nicht verwendet worden ist, und nicht zu veranlassen, dass die Flüssigkeit ausgegeben wird, wenn die Nutzungshistorie angibt, dass die Flüssigkeitsausgabevorrichtung verwendet worden ist; und
Übertragen einer Aktualisierungsanforderung an die externe Vorrichtung, um die in der externen Vorrichtung gespeicherte Nutzungshistorie der Flüssigkeitsausgabevorrichtung zu aktualisieren.

10. Verfahren nach Anspruch 9, ferner umfassend:
Übertragen eines Signals, das angibt, dass die Flüssigkeitsausgabevorrichtung zuvor benutzt worden ist, wenn die Nutzungshistorie angibt, dass die Flüssigkeitsausgabevorrichtung zuvor benutzt worden ist.

11. Verfahren nach Anspruch 9 oder 10, wobei die Ansteuerungsschaltung als Reaktion auf das erste Ansteuerungssignal ein Signal zum Ausgeben einer Flüssigkeit an den Aktuator bereitstellt und die Aktualisierungsanforderung an die externe Vorrichtung übertragen wird, wenn die Ansteuerungsschaltung das Signal an den Aktuator bereitstellt.

12. Verfahren nach Anspruch 9 oder 10, wobei die Aktualisierungsanforderung an die externe Vorrichtung übertragen wird, wenn die Flüssigkeitsabgabevorrichtung erkennt, dass ein Flüssigkeitsbehälter (22) der Flüssigkeitsausgabevorrichtung mit der Flüssigkeit gefüllt worden ist.

## Revendications

1. Appareil de distribution de liquide (1), comprenant :
une base (3) ;
un module de montage (5) configuré pour monter un dispositif d'évacuation de liquide (2) pour évacuer un liquide ;
une interface (17, 42) configurée pour communiquer avec un dispositif externe (18, 50) ; et
un circuit de commande (11) configuré pour fournir des tensions de commande à un actionneur (170) du dispositif d'évacuation de liquide (2),
**caractérisé en ce qu'**il comprend un lecteur (40) configuré pour acquérir un identifiant du dispositif d'évacuation de liquide, et une unité de commande (15) configurée pour :
déterminer si un dispositif d'évacuation de liquide est installé dans le module de montage,
en cas de détermination du fait que le dispositif d'évacuation de liquide est installé dans le module de montage, acquérir l'identification du dispositif d'évacuation de liquide,
générer une demande d'acquisition d'un historique d'utilisation du dispositif d'évacuation de liquide et transmettre la demande comprenant l'identifiant acquis au dispositif externe via l'interface, l'historique d'utilisation étant stocké dans le dispositif externe,
recevoir une réponse comprenant l'historique d'utilisation du dispositif d'évacuation de liquide du dispositif externe, et
amener le circuit de commande à fournir un signal pour évacuer un liquide vers l'actionneur si l'historique d'utilisation acquis indique que le dispositif d'évacuation de liquide n'a pas été utilisé, dans lequel
l'unité de commande est en outre configurée pour ne pas provoquer l'évacuation liquide si l'historique d'utilisation acquis indique que le dispositif d'évacuation de liquide a été utilisé.

2. Appareil selon la revendication 1, dans lequel le lecteur lit un code (29) sur le dispositif d'évacuation de liquide.

3. Appareil selon la revendication 1 ou 2, dans lequel l'unité de commande est en outre configurée pour transmettre une demande de mise à jour au dispositif externe pour mettre à jour l'historique d'utilisation du dispositif d'évacuation de liquide stocké dans le dispositif externe, une fois que l'unité de commande amène le circuit de commande à fournir le signal à l'actionneur du dispositif d'évacuation de liquide.

4. Appareil selon l'une quelconque des revendications 1 ou 2, dans lequel l'unité de commande est en outre configurée pour transmettre une demande de mise à jour au dispositif externe pour mettre à jour l'historique d'utilisation du dispositif d'évacuation de liquide stocké dans le dispositif externe, lorsque l'unité de commande détecte qu'un récipient de rétention de liquide (22) du dispositif d'évacuation de liquide a été rempli avec le liquide.

5. Système d'évacuation de liquide (500), comprenant :
l'appareil de distribution de liquide selon l'une quelconque des revendications 1 à 4 ; et
un dispositif externe, le dispositif externe étant un dispositif de traitement d'informations (50), comprenant :
une unité de stockage (54) configurée pour stocker l'historique d'utilisation ;
une deuxième interface (55) configurée pour communiquer avec l'appareil de distribution de liquide ; et
une deuxième unité de commande (51) configurée pour transmettre l'historique d'utilisation de l'unité de stockage à l'appareil de distribution de liquide via la deuxième interface.

6. Système selon la revendication 5, comprenant en outre le dispositif d'évacuation de liquide tel que défini dans l'une quelconque des revendications 1 à 4.

7. Système selon la revendication 6, dans lequel l'actionneur du dispositif d'évacuation de liquide comprend un film piézoélectrique.

8. Système selon la revendication 6, dans lequel l'actionneur du dispositif d'évacuation de liquide comprend un élément chauffant.

9. Procédé d'évacuation d'un liquide à partir d'un appareil de distribution de liquide (1), **caractérisé en ce que**
l'appareil de distribution de liquide comprend un lecteur (40) configuré pour acquérir un identifiant d'un dispositif d'évacuation de liquide,
l'appareil de distribution de liquide comprend en outre une unité de commande (15),
le procédé comprenant les étapes suivantes exécutées par l'unité de commande :
la détermination qu'un dispositif d'évacuation de liquide (2) est monté sur l'appareil de distribution de liquide ;
lorsqu'il est déterminé que le dispositif d'évacuation de liquide est monté sur l'appareil de distribution de liquide, l'acquisition d'un identifiant du dispositif d'évacuation de liquide via un lecteur configuré pour acquérir un identifiant du dispositif d'évacuation de liquide ;
la génération d'une demande d'acquisition d'un historique d'utilisation du dispositif d'évacuation de liquide et transmettre la demande comprenant l'identifiant acquis à un dispositif externe (18, 50), l'historique d'utilisation étant stocké dans le dispositif externe ;
la réception d'une réponse comprenant l'historique d'utilisation du dispositif d'évacuation de liquide à partir du dispositif externe ;
la transmission d'un premier signal de commande à un circuit de commande (11) de l'appareil de distribution de liquide pour commander un actionneur (170) du dispositif d'évacuation de liquide pour évacuer un liquide lorsque l'historique d'utilisation indique que le dispositif d'évacuation de liquide n'a pas été utilisé précédemment ; et ne pas provoquer l'évacuation du liquide lorsque l'historique d'utilisation indique que le dispositif d'évacuation de liquide a été utilisé ; et
la transmission d'une demande de mise à jour au dispositif externe pour mettre à jour l'historique d'utilisation du dispositif d'évacuation de liquide stocké dans le dispositif externe.

10. Procédé selon la revendication 9, comprenant en outre :
la transmission d'un signal indiquant que le dispositif d'évacuation de liquide a été utilisé précédemment lorsque l'historique d'utilisation indique que le dispositif d'évacuation de liquide a été utilisé précédemment.

11. Procédé selon la revendication 9 ou 10, dans lequel le circuit de commande transmet un signal d'évacuation d'un liquide à l'actionneur en réponse au premier signal de commande, et la demande de mise à jour est transmise au dispositif externe lorsque le circuit de commande transmet le signal à l'actionneur.

12. Procédé selon la revendication 9 ou 10, dans lequel la demande de mise à jour est transmise au dispositif externe lorsque l'appareil de distribution de liquide détecte qu'un récipient de rétention de liquide (22) du dispositif d'évacuation de liquide a été rempli avec le liquide.
